# EUROPEAN PATENT APPLICATION

(11) **EP 3 232 328 A1**
(43) Date of publication of application: **18.10.2017**
(21) Application number: 16165033.8
(22) Date of filing: 13.04.2016
(51) Int. Cl.: G06F 11/30, G06F 21/53

(54) **CONTROL SYSTEM AND CONTROL METHOD**

(71) Applicant: Airbus Defence and Space GmbH, 82024 Taufkirchen (DE); Airbus Operations (S.A.S.), 31060 Toulouse Cedex 9 (FR)
(72) Inventor: Müller, Kevin, 81825 München (DE); Uhrig, Sascha, 85653 Aying (DE); Leconte, Bertrand, 31000 Toulouse (FR)
(74) Representative: Isarpatent

(57) **Abstract**

The present invention provides a control system (1, 100) comprising a control unit (2, 102) configured to execute a plurality of functions with at least two different security levels (3, 4). The control system (1, 100) further comprises a number of groups (5, 6, 103, 104, 105) of control functions (7 - 10, 106 - 110), and a local monitoring function (11, 12, 111 - 113) for every group (5, 6, 103, 104, 105) of control functions (7 - 10, 106 - 110). Each one of the local monitoring functions (11, 12, 111 - 113) is configured to monitor the respective group (5, 6, 103, 104, 105) of control functions (7 - 10, 106 - 110) and generate respective monitoring control commands (13, 14, 114, 115, 116). Finally, the control system (1, 100) comprises a global monitoring function (15, 117), which is configured to receive the monitoring control commands (13, 14, 114, 115, 116) and execute control actions (16, 17, 118 - 122) based on the received monitoring control commands (13, 14, 114, 115, 116) on the respective control functions (7 - 10, 106 - 110) or group (5, 6, 103, 104, 105) of control functions (7 - 10, 106 - 110). The present invention further provides a corresponding method.

## Description

### TECHNICAL FIELD

The invention relates to a control system and a control method.

### BACKGROUND

Although applicable to any computer system that executes a plurality of functions in parallel, the present invention will be described in combination with embedded control systems.

The processing power and available resources of embedded devices have been increasing to dimensions where embedded processors are powerful enough to process multiple complex applications concurrently.

This enables e.g. the avionics industry to consolidate multiple functionalities on the same embedded hardware platform to safe space, weight, power and consequently fuel consumption.

However, having the powerful hardware available requires the development of secure software architectures, which are capable of hosting multiple applications on one hardware platform. This sharing of processing as well as peripheral resources needs to be controlled in order to fulfil the requirements for high assurance deployment of such devices. So-called health monitors supervise or monitor the different applications in such embedded systems.

In such multi-function embedded systems the health monitors need to run with increased privileges or within higher security levels in the embedded system in order to provide remedial actions in case of an error of a system function. Running a plurality of health monitors, e.g. one for every application, will provide a plurality of health monitoring applications within the higher security levels.

### SUMMARY

Accordingly, there is a need for separation of functions in embedded systems.

Therefore, a control system is provided, which comprises a control unit, e.g. the kernel of an operating system, especially a so called separation kernel, configured to execute a plurality of functions with at least two different security levels, especially wherein a superior security level allows the respective functions access to the functions of the respective inferior security levels. The control system further comprises a number, i.e. one or more, of groups of control functions, and a local monitoring function for every group of control functions. Each one of the local monitoring functions is configured to monitor the respective group of control functions and generate respective monitoring control commands. The local monitoring functions and the groups of control functions are executed by the control unit at a same first security level, which is lower than the highest security level. Finally, the control system comprises a global monitoring function, which is executed by the control unit at a second security level, which is higher than the first security level, and which is configured to receive the monitoring control commands and execute control actions based on the received monitoring control commands on the respective control functions or group of control functions.

Further, a control method is provided, the method comprising the steps of executing a number of groups of control functions and a local monitoring function for every group of control functions with a first security level with a control unit, executing a global monitoring function at a second security level, which is higher than the first security level, monitoring the respective group of control functions and generating respective monitoring control commands by each one of the local monitoring functions, receiving the monitoring control commands and executing control actions based on the received monitoring control commands on the respective control functions or group of control functions by the global monitoring function.

The aviation industry has e.g. developed the integration approach of Integrated Modular Avionics (IMA), a software architecture basing on partitioning.

In this architecture, a special operating system separates the available hardware resources and processing time into subsets and distributes these resources to the hosted applications. For security, an architectural approach called Multiple Independent Levels of Security (MILS) has been developed in the recent decades. This approach relies on separation and controlled information flow. Separation can be achieved by the partitioning concept already available in IMAs. Controlled Information flow can be added by ensuring a defined information flow policy between partitions enforced by the operating system. i.e. the kernel of the operating system, which can be e.g. the control unit of the present invention.

Suitable operating systems are called Separation Kernels. Generally, Separation Kernels split the hardware resources into isolated runtime environments, i.e. partitions, which host the applications. Between partitions, an allowed interaction can be granted. This enforcement of communication permission is scope of the Separation Kernel. Usually, these kernels bring along at least two kinds of partitions: 1) normal partitions, running isolated without additional system privileges running in a low security level and 2) partitions with administrator rights, allowed to control other partitions or the entire embedded system running in a high security level.

Such administrator partitions are useful to implement application components that can observe the application and react on abnormalities. Such components are called Watch Dogs or Health Monitors. In order to perform such reactions smartly, the Health Monitor needs to know internals of the application, i.e. it is very application-related.

Instead of providing a plurality of application specific monitoring functions, e.g. one in every partition, with increased privileges, the present invention provides only one general monitoring function, which has access to the single partitions or groups of control functions in the control system. The groups of control functions can therefore also be seen as another term for partitions in the system. The general health monitor can e.g. run in a single partition and at the same time have privileged access to the full system. Further the groups of control functions can form a general or superordinate control function, while every single control function is executed in a single partition, i.e. virtually or supported by hardware separated from the other functions.

Further, local monitoring functions are provided, which can be very application specific, i.e. they contain detailed information about possible conditions, like e.g. errors in the respective partition(s), and respective remedial actions.

In the context of the present invention, the term "control" refers to any type of control. A control function can e.g. control an actuator, read values from sensors or provide intermediate calculation results to other control functions. It is understood that these examples are not exhaustive.

Further embodiments of the present invention are subject of the further subclaims and of the following description, referring to the drawings.

In a possible embodiment, the control unit can provide a bidirectional communication channel between the local monitoring functions and the control functions of the respective group of functions. The bidirectional communication channel allows the local monitoring functions and the control functions to exchange information as needed. The control unit or other parts of the operating system of the control system are further capable of limiting or controlling the direct communication between the different functions. For example the control unit can allow or open, or deny or close a communication channel, respectively.

In a possible embodiment, the local monitoring functions can request status information from the control functions of the respective group of functions via the respective bidirectional communication channel. The local, i.e. function specific, monitoring functions can e.g. use a polling scheme to request status information from the single control functions of the respective group of functions. The local monitoring functions can e.g. permanently, i.e. with a predefined time schedule, request status information from the control functions and identify errors or internal monitoring values in the control functions. The errors can e.g. be stack overflow errors, division by zero errors, segmentation faults or the like. Internal monitoring values can e.g. refer to internal values of a controller or any other internal function value, which can be monitored.

In a possible embodiment, the control unit can be configured to forward predetermined events, which occur in the control functions, to the respective local monitoring function. Modern operating systems, i.e. the respective kernels, comprise a complex event processing or exception handling system. The exception handling system of the control unit can therefore easily be configured to forward events, i.e. information about the occurrence of specific errors in the control functions, to the respective local monitoring function. In order for the exception handling system to forward such information, the system can e.g. be adapted to trap the respective exceptions in the control functions or groups of functions.

In a possible embodiment, the control unit can comprise a number, i.e. one or more, of two-dimensional forwarding matrices, which comprise information about which event is to be forwarded to which local monitoring function from which sender. For example such a matrix can define that an error in partition A should be forwarded to health monitor A. Another matrix could define that the same error in partition B should be forwarded to health monitor B. The matrix can therefore also be a three-dimensional matrix, where the third dimension defines the respective partition. Such matrices can be preconfigured, when building or configuring the operating software of the respective control system. Very space efficient matrices use e.g. single bit values in every field of the matrices to signal that an event should be forwarded to a local monitoring function. For example, the columns can refer to the single events, while the rows can refer to the single local monitoring functions. A value of "1" in a cell of a matrix then means that the respective event should be forwarded to the respective local monitoring function. On the other side, a value of "0" means that the event is not forwarded.

In a possible embodiment, the control unit can be configured to provide communication channels from each one of the local monitoring functions to the global monitoring function. Such communication channels can be uni- or bi-directional and can be permanently configured or opened by the local monitoring functions via a request to the control unit only when they are needed.

In a possible embodiment, the local monitoring functions when providing the monitoring control commands can provide a receiver, a target, and the action of the respective monitoring control command in the respective monitoring control command. The receiver of the respective monitoring control command will usually be the global monitoring function. The target of the respective monitoring control command is the control function or group of functions on which the action is to be performed. Finally, the action indicates to the global monitoring function, what to do with the respective control function or group of functions. Such actions can e.g. comprise resetting, shutting down, rebooting or the like of the respective control function or group of functions. The monitoring control commands can e.g. be provided in the form of "receiver:/target/action", an example would be "hm:/FaP1/re". The "hm:" refers to the receiver, in this case the global monitoring function or "health monitor". The "/FaP1" section refers to Function a, i.e. the first, of Partition 1 or Group 1. Finally, "re" indicates that the respective function should be "restarted".

In the context of the present patent application global control functions can be implemented in the control system. Such global or superordinate control functions can be implemented by the single control functions, which each implement a part of the global functions purpose. The single control functions, which form the global control function, can be separated into respective groups of control functions, which can comprise a sub-set of the functionality of the global control function. In this context, every single control function and the local health monitors can e.g. run in a separate partition, which in this case only have one function each. Specific access privileges can be granted by the operating system for access from the health monitor partition to the groups or partitions of the local control functions. These access privileges can e.g. be configured during design or build time of the separation kernel.

In a possible embodiment, the global monitoring function can be configured to enforce access rights for the access of the local monitoring functions to the control functions and/or groups of functions. Specific access rights can be defined. Access rights can e.g. define which control functions may be influenced by local monitoring functions. Further access rights can define which actions a local monitoring function may perform on a control function or group of functions.

In a possible embodiment, the control unit can be configured to enforce access rights for the access of the local monitoring functions to the control functions and/or groups of functions. The control unit can enforce the same access rights as the above mentioned. However, instead of providing separate access control routines in the global health monitor the already present rights management of the control unit can be used to enforce the access rights. Further, the global health monitor can be provided without any knowledge of the respective rights and can therefore be kept as generic as possible. The control unit can e.g. validate or test specific rights before forwarding a message to a recipient. The control unit can e.g. test if the sender is allowed to send a message to the recipient, or if the specific content is allowed for the sender.

In a possible embodiment, the global monitoring function can be configured to execute global control actions on the control system, like e.g. restarting or shutting-down the control system. The respective commands can e.g. be provided in the form of "hm:/system/*", where * indicates the respective action. Also these global control actions can be under access control, either by the global health monitor or by the control unit.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: shows a block diagram of an embodiment of a control system according to the present invention;
- Fig. 2: shows a block diagram of another embodiment of a control system according to the present invention;
- Fig. 3: shows a block diagram of another embodiment of a control system according to the present invention;
- Fig. 4: shows a flow diagram of an embodiment of a method according to the present invention; and
- Fig. 5: shows a block diagram of a common control system.

In the figures like reference signs denote like elements unless stated otherwise.

### DETAILED DESCRIPTION OF THE DRAWINGS

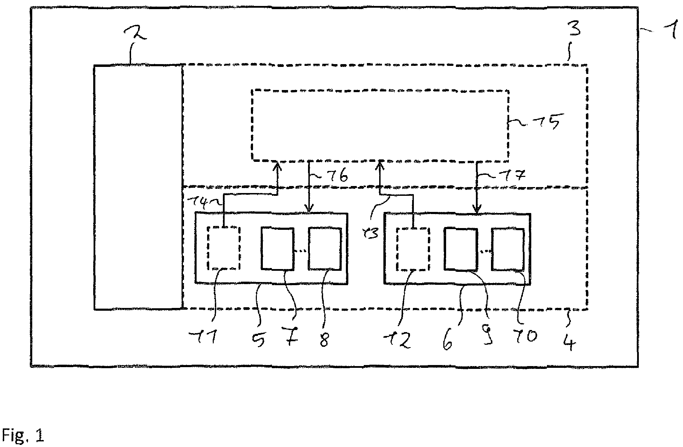

Fig. 1 shows a block diagram of a control system 1.

The control system 1 comprises a control unit 2. This control unit 2 can e.g. be a kernel 2, especially a separation kernel 2, which is executed by a processor (not shown) of the control system 1. The kernel 2 provides at least two different security levels 3 and 4. The security levels 3 and 4 are configured such, that functions running in the security level 3 can access or influence the functions in the security level 4. It can also be said, that the security level 3 is higher than the security level 4.

In security level 3 only one single global monitoring function 15 is executed. In security level 4 two groups 5, 6 of control functions 7, 8 and 9, 10 are executed. The control functions 7 - 10 can be any function that performs actual control, monitoring of actuators, reading of sensor values or any other function in the control system 1.

The groups 5 and 6 in one example are partitions, which are logically separated and each only have access to specific hardware resources of the control system 1. Such a logical separation can e.g. be provided by the separation kernel 2. It is to be understood, that the number of two groups 5, 6 is only exemplary and any other number of groups can be used with the present invention. In another example the groups 5, 6 form a general or superordinate control function, while every single control function 7, 8 and 9, 10 is executed in a single partition, i.e. virtually or supported by hardware separated from the other functions 7, 8 and 9, 10.

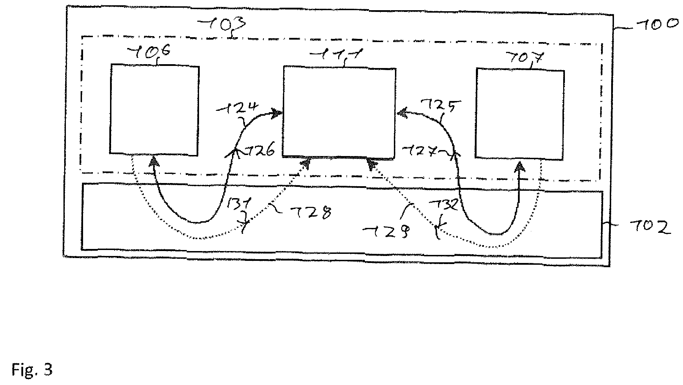

Every group 5, 6 further comprises a local health monitor 11, 12. The local health monitors 11, 12 supervise or monitor the single functions 7, 8 and 9, 10 in the respective group 5, 6. While the monitoring can be via a direct communication between the local health monitors 11, 12 and the single functions 7, 8 and 9, 10, a further communication scheme can be used, which will be described in conjunction with Fig. 3.

Depending on the state of the single functions 7, 8 and 9, 10, the local health monitors 11, 12 provide monitoring control commands 13, 14 to the global monitoring function 15. The local health monitors 11, 12 calculate based on the current state of the single functions 7, 8 and 9, 10, if a remedial action is necessary, and what remedial action is necessary. The local health monitors 11, 12 can also collect states or status information from all functions 7, 8, and 9, 10 in a group 5, 6. Further, forwarding of states of all functions, which belong to a superordinate control function (not explicitly shown) can be forwarded to local health monitors 11, 12, e.g. via the separation kernel 2. This information is encoded in the monitoring control commands 13, 14, which can then be analysed by the global monitoring function 15. The global monitoring function 15 then executes respective control actions 16, 17 on the groups 5, 6. Such control actions 16, 17 can e.g. comprise restarting a group 5, 6 or single function 7, 8, and 9, 10, resetting a group 5, 6 or single function 7, 8, and 9, 10, or stopping a group 5, 6 or single function 7, 8, and 9, 10. Such an action can also comprise booting or starting an alternative, redundant group as a replacement for one of the groups 5, 6.

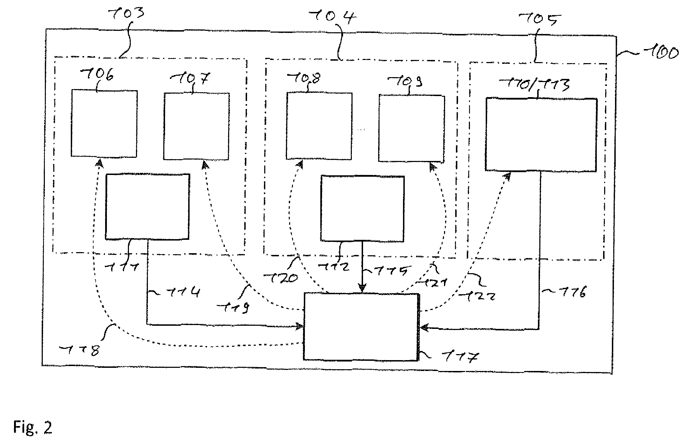

Fig. 2 shows a block diagram of another control system 100. In the control system 100 the group 103 comprises two functions 106, 107 together with a local monitoring function 111. The group 104 comprises a plurality of functions 108, 109, wherein more functions are hinted at by three dots. Group 104 also comprises a local monitoring function 112. Finally, group 105 comprises a single function 110, which also implements the local monitoring function 113.

Fig. 2 servers to show the signal flow from the local monitoring functions 111, 112, 113 to the respective control functions 106 - 110. In general, the local monitoring functions 111, 112, 113 cannot directly influence any one of the functions 106 - 110 because they run in the same low security level 4 (see Fig. 1).

If any one of the local monitoring functions 111, 112, 113 detects a problem in one of the respective control functions 106 - 110, it informs the global monitoring function 117 via explicit monitoring control commands 114, 115, 116. The global monitoring function 117 will then decide based on the respective monitoring control commands 114, 115, 116, which action to take. If necessary, the global monitoring function 117 will execute respective control actions 118 - 122 on the single functions 106 - 110 or groups 103 - 105. Such control actions 118 - 122 can e.g. comprise restarting/resetting a single function 106 - 110 or group 103 - 105, or stopping a single function 106 - 110 or group 103 - 105.

In Fig. 3 the communication between the functions 106, 107 of group 103 and the local monitoring function 111 will be described in detail. It is to be understood, that the communication between the local monitoring functions 111, 112, 113 and the global monitoring function 117 and the single functions 106 - 110 or groups 103 - 105 can be performed accordingly, only that the kernel 102 routes the information between different security levels 3, 4.

Of the groups 103, 104, 105 only the group 103 is shown exemplarily in Fig. 3, which comprises the two control functions 106, 107 and the local monitoring function 111. Further the kernel 102 is shown, which can provide different communication channels 124, 125, 128, 129 between the control functions 106, 107 and the local health monitor 111. Even though bidirectional communication channels 124, 125 and unidirectional communication channels 128, 129 are shown in Fig. 3, only one of both variants may be employed in one embodiment.

The bidirectional communication channels 124, 125 enable the local monitoring function 111 to communicate actively with the functions 106, 107 and e.g. poll their status. Polling in this context refers to repeated, i.e. in a predetermined time interval, interactions, which actively request a status information from the respective control function 106, 107. The respective function 106, 107 will then actively transmit status information to the local monitoring function 111. Based on the status information the local monitoring function 111 will then decide whether to transmit a monitoring control command 114, 115, 116 to the global monitoring function 117.

The unidirectional communication channels 128, 129 in contrast do not enable such an active communication. Instead these channels 128, 129 are mere logically configured eventforwarding channels 128, 129. For example the kernel 102 can supervise the execution of the functions 106, 107. In the event, that the kernel 102, i.e. the exception handling of the kernel 102, detects an error or exception in one of the functions 106, 107, this error 131, 132 or a message regarding this error 131, 132 is transmitted to the local monitoring function 111. Such errors 131, 132 can be any kind of predefined, undesired state of the respective function 106, 107. Examples of such errors can be a segmentation fault, a divide by zero error or the like. In this case, no active polling is needed and a selection can be performed on what errors 131, 132 should be forwarded.

In the context of the present invention the term security level 3, 4 refers to security levels, which are enforced by the kernel 2, 102 of the respective control system 1, 100. It follows that respective software routines and algorithms provide the security levels 3, 4. However, it is also possible that the kernel 2, 102 relies on hardware to provided security levels, as can e.g. be provided by a processor or microcontroller.

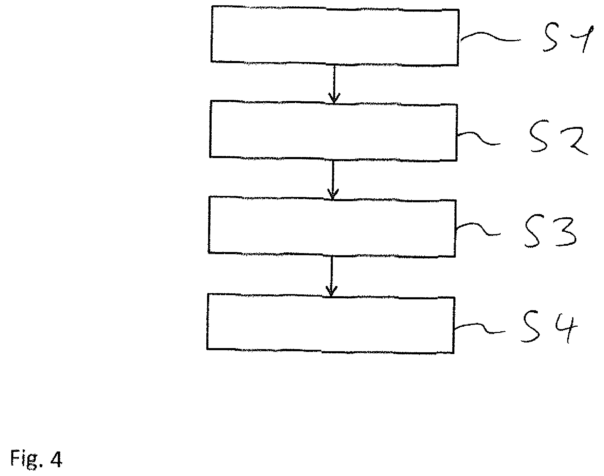

Fig. 4 shows a flow diagram of an embodiment of a control method according to the present invention.

In a first step S1 a number of groups 5, 6, 103, 104, 105 of control functions 7 - 10, 106 - 110 and a local monitoring function 11, 12, 111 - 113 for every group 5, 6, 103, 104, 105 of control functions 7 - 10, 106 - 110 are executed each within or with a first security level 4.

In a second step S2 a global monitoring function 15, 117 is executed at a second security level 3, which is higher than the first security level 4. It is obvious, that the numerals first and second only serve to differentiate the single steps and that no specific order is implied by terms like "first" and "second" and the like. In fact, the execution of the functions 5, 6, 103, 104, 105, 7 - 10, 106 - 110, and 15, 117 can e.g. be controlled by a control unit 2, 102, which can be a kernel 2, 102. Such a kernel 2, 102 can run a plurality of functions 5, 6, 103, 104, 105, 7 - 10, 106 - 110, and 15, 117 in "parallel" on a single core processor by employing respective scheduling techniques.

The respective group 5, 6, 103, 104, 105 of control functions 7 - 10, 106 - 110 is monitored in step S3 by each one of the local monitoring functions 11, 12, 111 - 113. Further, respective monitoring control commands 13, 14, 114, 115, 116 are generated by each one of the local monitoring functions (11, 12, 111 - 113 in step S3 only if necessary.

Finally in step S4 the monitoring control commands 13, 14, 114, 115, 116 are received and control actions 16, 17, 118 - 122 are executed based on the received monitoring control commands 13, 14, 114, 115, 116 on the respective control functions 7 - 10, 106 - 110 or group 5, 6, 103, 104, 105 by the global monitoring function 15, 117.

A bidirectional communication channel 124, 125 can e.g. be provided between the local monitoring functions 11, 12, 111 - 113 and the control functions 7 - 10, 106 - 110 of the respective group 5, 6, 103, 104, 105. The local monitoring functions 11, 12, 111 - 113 can then actively request status information from the control functions 7 - 10, 106 - 110 of the respective group 5, 6, 103, 104, 105 via the respective bidirectional communication channel 124, 125.

Another way of communicating data between the local monitoring functions 11, 12, 111 - 113 and the control functions 7 - 10, 106 - 110 can be provided by simple forwarding predetermined events 131, 132, which occur in the control functions 7 - 10, 106 - 110. A kernel 2, 102 can for example forward the predetermined events 131, 132 to the respective local monitoring function 11, 12, 111 - 113 via unidirectional communication channels 128, 229. A number of two-dimensional forwarding matrices can e.g. provide the configuration of the event forwarding. The matrices can e.g. comprise information about which event is to be forwarded to which local monitoring function 11, 12, 111 - 113. A single matrix can e.g. be provided for every sender partition or group 5, 6, 103, 104, 105. Alternatively, the single matrices can be combined into a three-dimensional matrix.

Further a communication channel can be provided from each one of the local monitoring functions 11, 12, 111 - 113 to the global monitoring function 15, 117. The monitoring control commands 13, 14, 114, 115, 116 can e.g. comprise a receiver, a target, and the action of the respective monitoring control command 13, 14, 114, 115, 116.

Specific access rights can be enforced for the monitoring control commands 13, 14, 114, 115, 116. The global monitoring function 15, 117 can e.g. enforce access rights for the access of the local monitoring functions 11, 12, 111 - 113 to the control functions 7 - 10, 106 - 110 and/or groups 5, 6, 103, 104, 105. Alternatively, the control unit or kernel 2, 102 can enforce access rights for the access of the local monitoring functions 11, 12, 111 - 113 to the control functions 7 - 10, 106 - 110 and/or groups 5, 6, 103, 104, 105.

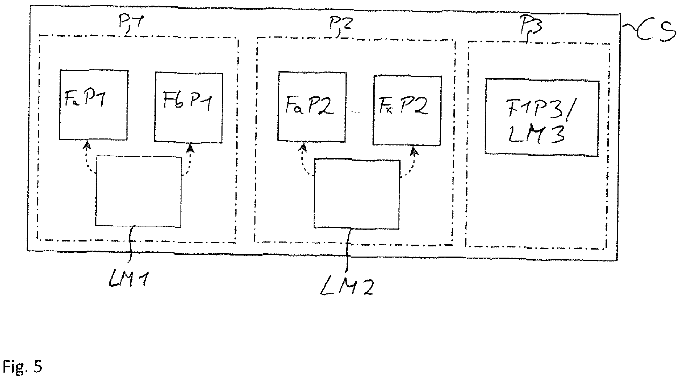

Fig. 5 shows a block diagram of a common control system CS.

The common control system CS comprises three partitions P1, P2, P3, which are logically separated. Partition P1 comprises two functions FaP1, FbP1. Partition P2 comprises a plurality of functions FaP2, FxP2. Finally, partition P3 comprises a single function FlP3, which also is a local monitor LM3.

The local monitors LM1, LM2, LM3 all run on the same security level (not separately illustrated).

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 1, 100: control system
- 2, 102: control unit
- 3, 4: security level
- 5, 6, 103, 104, 105: groups
- 7 - 10, 106 - 110: control functions
- 11, 12, 111 - 113: local monitoring function
- 13, 14, 114, 115, 116: monitoring control commands
- 15, 117: global monitoring function
- 16, 17, 118 - 122: control actions
- 124, 125: bidirectional communication channel
- 126, 127: status information
- 128, 129: unidirectional communication channels
- 131, 132: predetermined events

## Claims

1. Control system (1, 100) comprising:
a control unit (2, 102) configured to execute a plurality of functions with at least two different security levels (3, 4),
a number of groups (5, 6, 103, 104, 105) of control functions (7 - 10, 106 - 110),
a local monitoring function (11, 12, 111 - 113) for every group (5, 6, 103, 104, 105) of control functions (7 - 10, 106 - 110), wherein each one of the local monitoring functions (11, 12, 111 - 113) is configured to monitor the respective group (5, 6, 103, 104, 105) of control functions (7 - 10, 106 - 110) and generate respective monitoring control commands (13, 14, 114, 115, 116), the local monitoring functions (11, 12, 111 - 113) and the groups (5, 6, 103, 104, 105) of control functions (7 - 10, 106 - 110) being executed by the control unit (2, 102) at a same first security level (4), which is lower than the highest security level, and
a global monitoring function (15, 117), which is executed by the control unit (2, 102) at a second security level (3), which is higher than the first security level (4), and which is configured to receive the monitoring control commands (13, 14, 114, 115, 116) and execute control actions (16, 17, 118 - 122) based on the received monitoring control commands (13, 14, 114, 115, 116) on the respective control functions (7 - 10, 106 - 110) or group (5, 6, 103, 104, 105) of control functions (7 - 10, 106 - 110).

2. Control system (1, 100) according to claim 1, wherein the control unit (2, 102) provides a bidirectional communication channel (124, 125) between the local monitoring functions (11, 12, 111 - 113) and the control functions (7 - 10, 106 - 110) of the respective group (5, 6, 103, 104, 105) of control functions (7 - 10, 106 - 110).

3. Control system (1, 100) according to claim 2, wherein the local monitoring functions (11, 12, 111 - 113) request status information from the control functions (7 - 10, 106 - 110) of the respective group (5, 6, 103, 104, 105) of control functions (7 - 10, 106 - 110) via the respective bidirectional communication channel (124, 125).

4. Control system (1, 100) according to any one of the preceding claims, wherein the control unit (2, 102) is configured to forward predetermined events (131, 132), which occur in the control functions (7 - 10, 106 - 110), to the respective local monitoring function (11, 12, 111 - 113) via unidirectional communication channels (128, 129).

5. Control system (1, 100) according claim 4, wherein the control unit (2, 102) comprises a number of two-dimensional forwarding matrices, which comprise information about which event is to be forwarded to which local monitoring function (11, 12, 111 - 113).

6. Control system (1, 100) according to any one of the preceding claims, wherein the control unit (2, 102) is configured to provide communication channels from each one of the local monitoring functions (11, 12, 111 - 113) to the global monitoring function (15, 117).

7. Control system (1, 100) according to claim 6, wherein the local monitoring functions (11, 12, 111 - 113) when providing the monitoring control commands (13, 14, 114, 115, 116) provide a receiver, a target, and the action of the respective monitoring control command (13, 14, 114, 115, 116) in the respective monitoring control command (13, 14, 114, 115, 116).

8. Control system (1, 100) according to claim 7, wherein the global monitoring function (15, 117) is configured to enforce access rights for the access of the local monitoring functions (11, 12, 111 - 113) to the control functions (7 - 10, 106 - 110) and/or groups (5, 6, 103, 104, 105) of control functions (7 - 10, 106 - 110).

9. Control system (1, 100) according to claim 7, wherein the control unit (2, 102) is configured to enforce access rights for the access of the local monitoring functions (11, 12, 111 - 113) to the control functions (7 - 10, 106 - 110) and/or groups (5, 6, 103, 104, 105) of control functions (7 - 10, 106 - 110).

10. Control system (1, 100) according to any one of the preceding claims, wherein the global monitoring function (15, 117) is configured to execute global control actions (16, 17, 118 - 122) on the control system (1, 100).

11. Control method comprising the steps of:
executing (S1) a number of groups (5, 6, 103, 104, 105) of control functions (7 - 10, 106 - 110) and a local monitoring function (11, 12, 111 - 113) for every group (5, 6, 103, 104, 105) of control functions (7 - 10, 106 - 110) with a first security level (4) with a control unit (2, 102),
executing (S2) a global monitoring function (15, 117) at a second security level (3), which is higher than the first security level (4),
monitoring (S3) the respective group (5, 6, 103, 104, 105) of control functions (7 - 10, 106 - 110) and generating respective monitoring control commands (13, 14, 114, 115, 116) by each one of the local monitoring functions (11, 12, 111 - 113), and
receiving (S4) the monitoring control commands (13, 14, 114, 115, 116) and executing control actions (16, 17, 118 - 122) based on the received monitoring control commands (13, 14, 114, 115, 116) on the respective control functions (7 - 10, 106 - 110) or group (5, 6, 103, 104, 105) of control functions (7 - 10, 106 - 110) by the global monitoring function (15,117).

12. Control method according to claim 11, further comprising providing a bidirectional communication channel (124, 125) between the local monitoring functions (11, 12, 111 - 113) and the control functions (7 - 10, 106 - 110) of the respective group (5, 6, 103, 104, 105) of functions, and especially wherein the local monitoring functions (11, 12, 111 - 113) request status information from the control functions (7 - 10, 106 - 110) of the respective group (5, 6, 103, 104, 105) of control functions (7 - 10, 106 - 110) via the respective bidirectional communication channel (124, 125).

13. Control method according to any one of the preceding claims 11 and 12, further comprising forwarding predetermined events (131, 132), which occur in the control functions (7 - 10, 106 - 110), to the respective local monitoring function (11, 12, 111 - 113) via unidirectional communication channels (128, 129), especially wherein a number of two-dimensional forwarding matrices is provided, which comprise information about which event is to be forwarded to which local monitoring function (11, 12, 111 - 113).

14. Control method according to any one of the preceding claims 11 to 13, further comprising providing a communication channel from each one of the local monitoring functions (11, 12, 111 - 113) to the global monitoring function (15, 117), especially wherein the local monitoring functions (11, 12, 111 - 113) when providing the monitoring control commands (13, 14, 114, 115, 116) provide a receiver, a target, and the action of the respective monitoring control command (13, 14, 114, 115, 116) in the respective monitoring control command (13, 14, 114, 115, 116).

15. Control method according to claim 14, wherein the global monitoring function (15, 117) enforces access rights for the access of the local monitoring functions (11, 12, 111 - 113) to the control functions (7 - 10, 106 - 110) and/or groups (5, 6, 103, 104, 105) of control functions (7 - 10, 106 - 110), or wherein the control unit (2, 102) enforces access rights for the access of the local monitoring functions (11, 12, 111 - 113) to the control functions (7 - 10, 106 - 110) and/or groups (5, 6, 103, 104, 105) of control functions (7 - 10, 106 - 110), or wherein the control unit (2, 102) enforces access rights for the access of the local monitoring functions (11, 12, 111 - 113) to global control actions (16, 17, 118 - 122) executed by the global monitoring function (15, 117).
